# EUROPEAN PATENT SPECIFICATION

(11) **EP 4 445 997 B1**
(45) Date of publication and mention of the grant of the patent: **24.12.2025**
(21) Application number: 24166570.2
(22) Date of filing: 26.03.2024
(51) Int. Cl.: B01F 27/1131, B01F 27/117, B01F 23/53, B01F 23/50, B01F 27/81

(54) **MIXING IMPELLER AND PULPING DEVICE**
MISCHLAUFRAD UND AUFSCHLUSSVORRICHTUNG
ROUE DE MÉLANGE ET DISPOSITIF DE RÉDUCTION EN PÂTE

(30) Priority: 28.03.2023 CN 202310370736
(43) Date of publication of application: 16.10.2024
(73) Proprietor: Shangshui Smartech Ltd., Shenzhen, Guangdong 518118 (CN)
(72) Inventor: BAI, Shujuan, Shenzhen 518118 (CN); DU, Baodong, Shenzhen 518118 (CN); JIN, Xudong, Shenzhen 518118 (CN); SHI, Qiao, Shenzhen 518118 (CN); ZHANG, Wang, Shenzhen 518118 (CN)
(74) Representative: Hamer, Christopher K.

(56) References cited:
- CN-A- 105 457 524
- DE-C- 879 081
- US-A1- 2017 021 313
- US-A1- 2018 339 277

## Description

### TECHNICAL FIELD

The disclosure relates to the technical field of pulping devices, and particularly relates to a mixing impeller and a pulping device.

### BACKGROUND

A pulping device is widely used in industries such as pharmaceutical, food, and chemical industry, and during a preparation process stage, liquid and solid are fully mixed to obtain a pre-prepared mixture, thereby improving efficiency of subsequent processing.

In an existing device, dispersion and mixing of solid and liquid are integrated into the same device, and due to an interface between the solid and the liquid is relatively low in an existing structure, the solid and the liquid have a small contact area and a short contact time, thereby causing problems of a low mixing degree of the solid and the liquid and low mixing efficiency, and thus affecting pulping efficiency.
DE879081C discloses an agitator as per the preamble of claim 1 with air or gas supply, where a tube which can be rotated in a manner known per se has air inlet openings above the fermentation liquid with wing-like or umbrella-like attachments which promote air intake, and at the lower end of the air tube near the bottom of the fermentation vessel there are air outlets which are so large that their cross-section is larger than the total cross-section of the air intake openings. US2017/021313 A1, US2018/339277 A1 and CN105457524 A all disclose an agitator as per the preamble of claim 1.

### SUMMARY

Aspects of the invention are set out in the appended claims. A mixing impeller includes an impeller body, where the impeller body defines, at a bottom end of the impeller body, a cavity extending to a top end of the impeller body, and the impeller body defines an overflow hole in communication with the cavity at a side wall of the impeller body.

The disclosure also puts forward a pulping device, the pulping device includes a housing, and the mixing impeller is disposed in the housing.

### BRIEF DESCRIPTION OF THE DRAWINGS

In order to more clearly illustrate embodiments of the disclosure or technical solutions in the related art, the following is a brief introduction of accompany drawings required to be used in the description of the embodiments or the related art, obviously, the accompany drawings described below are some embodiments of the disclosure, those of ordinary skill in the art may also obtain other drawings according to these drawings without creative effort.
FIG. 1 is a structural view of a mixing impeller provided in some embodiments.
FIG. 2 is a half-sectional view of the mixing impeller illustrated in FIG. 1.
FIG. 3 is a structural view of a mixing impeller with flat overflow holes provided in some embodiments.
FIG. 4 is a structural view of a mixing impeller with baffles provided in some embodiments.
FIG. 5 is a half-sectional view of the mixing impeller illustrated in FIG. 4.
FIG. 6 is a cross-sectional view of a pulping device equipped with a mixing impeller provided in some embodiments.

### DETAILED DESCRIPTION

The following will describe embodiments of the disclosure clearly and comprehensively with reference to accompanying drawings.

In description of the disclosure, it should be understood that locations or positional relationships indicated by terms such as "center", "on", "under", "left", "right", "vertical", "horizontal", "in", "out", and the like are locations or positional relationship based on accompanying drawings and are only for the convenience of description and simplicity, rather than explicitly or implicitly indicate that apparatuses or components referred to herein must have a certain direction or be configured or operated in a certain direction and therefore cannot be understood as limitations to the disclosure. In addition, terms "first", "second", and the like are only used for description and cannot be understood as explicitly or implicitly indicating relative importance.

In description of the present disclosure, it should be noted that, unless stated otherwise, terms "mount", "coupling", and "connecting" referred to herein should be understood in broader sense. For example, they may include a fixed coupling, a removable coupling, or an integrated coupling; they may include a mechanical coupling or an electrical coupling; they may include a direct coupling, an indirect coupling through a medium, or an interconnection between two components, or an interaction coupling between two components. For those of ordinary skill in the art, the above terms in the present disclosure can be understood according to specific situations.

In addition, technical features involved in different embodiments of the disclosure described below may be combined with each other without conflict.

In order to overcome defects of a low mixing degree of solid and liquid and low mixing efficiency caused by a low interface between solid and liquid in the related art, the disclosure provides a mixing impeller and a pulping device.

In order to solve the described technical problem, the technical solution of the disclosure is as follows.

A mixing impeller includes an impeller body, where the impeller body defines, at a bottom end of the impeller body, a cavity extending to a top end of the impeller body, and the impeller body defines an overflow hole in communication with the cavity at a side wall of the impeller body.

In some embodiments of the present disclosure, the overflow hole is implemented as multiple overflow holes, the multiple overflow holes are arranged around the side wall of the impeller body at intervals, and the overflow holes are disposed at the side wall close to the top end of the impeller body.

The overflow hole is inclined from the top end of the impeller body to the bottom end of the impeller body in a direction from an inner wall of the impeller body to an outer wall of the impeller body.

In some embodiments of the present disclosure, the overflow hole is inclined to the same side from inside to outside as a direction opposite to a rotation direction of the impeller body.

In some embodiments of the present disclosure, the overflow hole is a circular hole, an elliptic hole, a polygonal hole, or a flat hole.

In some embodiments of the present disclosure, the impeller body includes a cylinder segment and a frustum section smoothly connected to the cylinder segment, the frustum section has a large end connected to the cylinder segment, and the cavity passes through the cylinder segment and extends into the frustum section.

In some embodiments of the present disclosure, the overflow hole is defined on a side wall of the frustum section.

In some embodiments of the present disclosure, the cavity is an annular cavity, and the annular cavity and the impeller body are disposed coaxially; or the cavity includes multiple sub-cavities arranged at intervals, and multiple sub-cavities cooperatively form the cavity.

In some embodiments of the present disclosure, the impeller body is provided with multiple vanes arranged at intervals at the outer wall of impeller body, and at least one overflow hole is defined in an area between two adjacent vanes.

In some embodiments of the present disclosure, the impeller body is provided with multiple vanes arranged at intervals at the outer wall of impeller body, and two ends of the baffle abut against vanes at two adjacent sides of the baffle.

The disclosure also puts forward a pulping device, the pulping device includes a housing, and the mixing impeller is disposed in the housing.

The technical solution of the disclosure has the following advantages.

In the mixing impeller of the disclosure, the impeller body can rotate around its own axis, and during rotation, solid material, such as powder, is transported from top to bottom through an outer flow channel of the impeller body, material is transported from bottom to top through the cavity of the impeller body, and the liquid material flows through the cavity and flows of from the overflow hole defined on the side wall of the impeller body to be mixed with the solid material. A liquid level of the liquid material is improved due to the cavity and the overflow hole of the impeller body, so as to improve the height of a mixing interface of the solid material and the liquid material, and further improve the mixing efficiency.

In the mixing impeller of the disclosure, the overflow hole is disposed on the side wall at the top end of the impeller body. The liquid material is transported from bottom to top and flows out of the overflow hole after flowing through the cavity, that is, flows out from the top side wall of the impeller, thereby improving the height of the mixing interface of the solid material and the liquid material. Multiple overflow holes are arranged at intervals, and when the impeller body rotates around its own axis, the liquid material in the cavity is thrown out of multiple overflow holes under the action of centrifugal force, so as to disperse the liquid material, and further improve the mixing efficiency of the solid material and the liquid material.

In the mixing impeller of the invention, the overflow hole is inclined from the top end of the impeller body to the bottom end of the impeller body in the direction from the inner wall of the impeller body to the outer wall of the impeller body, and a junction of the solid material and the liquid material forms an inclined plane, thereby increasing a mixing contact area of solid and liquid, improving the mixing efficiency of the solid and the liquid, increasing the downward transporting speed of the solid, reducing the returning possibility of material, so as to enhance the mixing quality of solid and liquid and improve the pulping efficiency. In addition, a caking caused by mixing of the solid material and the liquid material can also be avoided from blocking the overflow hole and affecting the mixing efficiency.

In an embodiment not forming part of the present invention, when the overflow hole is inclined from the bottom end of the impeller body to the top end of the impeller body, or when the overflow hole is arranged in the radial direction of the impeller body, the baffle is disposed above the overflow hole, and the baffle is inclined from the top end of the impeller body to the bottom end of the impeller body, so that when the solid material flows from the top to the bottom, under the blocking effect of the baffle, the solid material flows in a direction away from the outer wall of the impeller, so as to avoid affecting the mixing efficiency, caused by blockage of overflow hole due to the caking generated when the solid material and the liquid material are mixed.

In an embodiment not forming part of the present invention, in the mixing impeller in the direction from the inner wall of the impeller body to the outer wall of the impeller body, the overflow hole is inclined from the bottom end of the impeller body to the top end of the impeller body, thereby improving the height of the mixing interface of the solid material and the liquid material, and further improving the mixing efficiency.

In the mixing impeller of the disclosure, multiple sub-cavities cooperatively form the cavity, and when the impeller body rotates, the liquid material rotates with the impeller in multiple sub-cavities, and during rotation, the liquid material is dispersed under the action of centrifugal force, so that the liquid material flowing out of the overflow hole is more dispersed, and the mixing efficiency of the solid material and the liquid material is higher.

In the mixing impeller of the disclosure, at least one overflow hole is defined in an area between two vanes, and the overflow hole is inclined to the same side from inside to outside as a direction opposite to a rotation direction of the impeller body, during rotation of the impeller body around its own axis, the liquid material in the cavity is thrown out of overflow holes under the action of centrifugal force, and is further dispersed after colliding with the vanes, so that the solid material and the liquid material is mixed more uniformly, less caking is generated, and the mixing efficiency is improved.

In the pulping device of the disclosure, the mixing impeller is mounted in the housing, thereby improving the height of the mixing interface of the solid material and the liquid material of the pulping device, increasing a feeding speed, and improving the pulping efficiency.

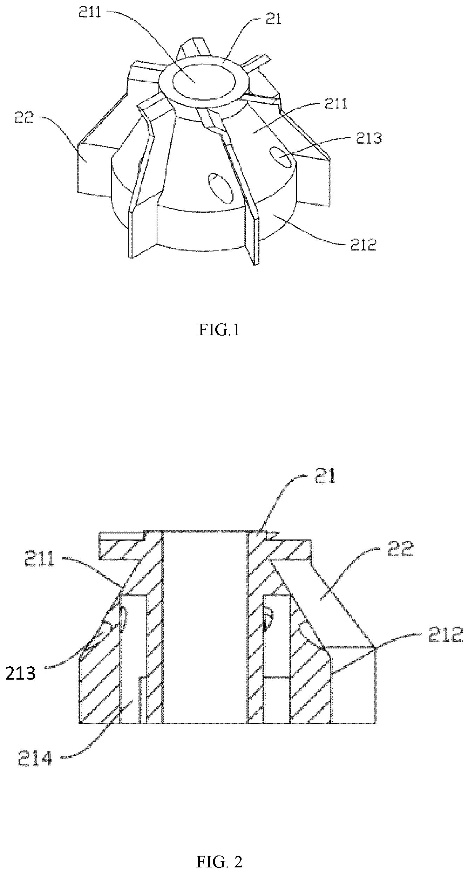

Referring to FIG. 1 to FIG. 5, the disclosure provides a mixing impeller. The mixing impeller includes an impeller body 21, the impeller body 21 defines a cavity 214 extending from the bottom end of the impeller body 21 to the top end of the impeller body 21, and the impeller body 21 defines an overflow hole 213 in communication with the cavity 214 at a side wall of the impeller body 21.

Specifically, the impeller body 21 can rotate around its own axis, and during rotation, solid material is transported from top to bottom along an outer flow channel of the impeller body 21, and liquid material is transported from bottom to top through the cavity of the impeller body 21. The liquid material flows through the cavity 214 and flows out of the overflow hole 213 defined on the side wall of the impeller body 21 to be mixed with the solid material. A liquid level of the liquid material is improved due to the cavity 214 and the overflow hole 213 on the impeller body 21, so as to improve the height of a mixing interface of the solid material and the liquid material, and further improve the mixing efficiency.

Referring to FIG. 1 to FIG. 5, in some embodiments of the disclosure, the overflow hole 213 is implemented as multiple overflow holes 213, the multiple overflow holes 213 are arranged around the side wall of the impeller body 21 at intervals, and multiple overflow holes 213 are disposed at the side wall close to a top end of the impeller body 21.

Specifically, the overflow hole 213 is disposed on the side wall at the top end of the impeller body 21, and the liquid material is transported from bottom to top and flows out of the overflow hole 213 after flowing through the cavity 214, that is, the liquid material flows out from the top side wall of the impeller, thereby improving the height of the mixing interface of the solid material and the liquid material. Multiple overflow holes 213 are arranged at intervals, and when the impeller body 21 rotates around its own axis, the liquid material in the cavity 214 is thrown out of multiple overflow holes 213 under the action of centrifugal force, so as to disperse the liquid material, and further improve the mixing efficiency of the solid material and the liquid material.

Referring to FIG. 2, according to the invention, in a direction from an inner wall of the impeller body 21 to an outer wall of the impeller body 21, the overflow hole 213 is inclined from the top end of the impeller body 21 to the bottom end of the impeller body 21.

Specifically, when the overflow hole 213 is inclined from the top end of the impeller body 21 to the bottom end of the impeller body 21, the liquid material flows downward after the liquid material is thrown out of the overflow hole, and the solid material also flows downward, so that a mixing interface of the solid material and the liquid material forms an inclined surface, thereby increasing a mixing contact area of the solid material and the liquid material, improving the mixing efficiency of the solid material and the liquid material, increasing the downward transporting speed of the solid material, reducing the returning probability of material, and improving the mixing quality of the solid material and the liquid material. In addition, a caking caused by mixing of the solid material and the liquid material can also be avoided from blocking the overflow hole 213 and affecting the mixing efficiency.

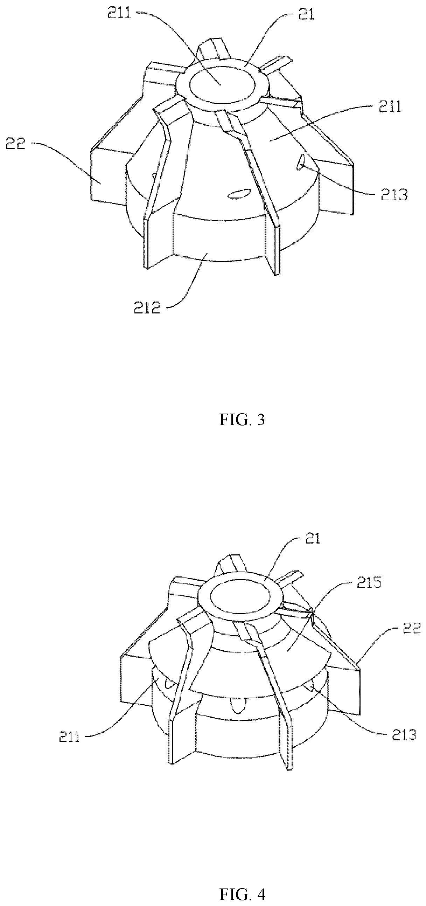

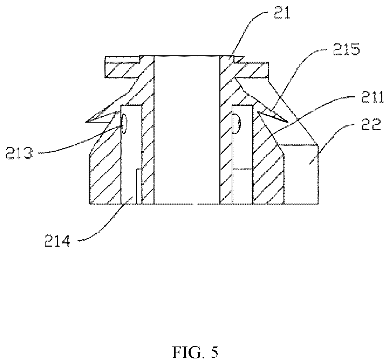

Referring to FIG. 4 and FIG. 5, in an embodiment not forming part of the present invention, the impeller body 21 is provided with a baffle 215 above the overflow hole 213, and the baffle 215 is inclined from the top end of the impeller body 21 to the bottom end of the impeller body 21.

Specifically, a caking may be generated easily during mixing of the solid material and the liquid material, when the overflow hole 213 is inclined from the bottom end of the impeller body 21 to the top end of the impeller body 21, or when the overflow hole 213 is arranged in a radial direction of the impeller body 21, the solid materials and liquid materials are mixed and in contact at the overflow hole 213, and if the caking is generated and the caking generated is too large, the caking is easy to fall into the overflow hole 213, causing blockage to the overflow hole 213, thus affecting the feeding of the liquid material.

The impeller body 21 is provided with the baffle 215 above the overflow hole 213, and the baffle 215 is inclined from the top end of the impeller body 21 to the bottom end of the impeller body 21, so that when the solid material flows from top to bottom, under the blocking of the baffle 215, the solid material flows in a direction away from the outer wall of the impeller body 21, avoiding mixing of the solid material and liquid material at the overflow hole 213, thereby avoiding the blockage of the overflow hole 213 caused by the caking generated, and avoiding affecting the mixing efficiency.

In an embodiment not forming part of the present invention, in a direction from the inner wall of the impeller body 21 to the outer wall of the impeller body 21, the overflow hole 213 is inclined from the bottom end of the impeller body 21 to the top end of the impeller body 21.

Specifically, the overflow hole 213 is inclined from the bottom end of impeller body 21 to the top end of impeller body 21, to further improve the height of the mixing interface of the liquid material and the solid material, thereby improving the mixing quality and increasing the mixing speed.

In some embodiments of the disclosure, the overflow hole 213 is inclined to the same side from inside to outside as a direction opposite to a rotation direction of the impeller body 21.

Specifically, in order to improve dispersion of liquid material and make the liquid material better mixed with solid materials, the overflow hole 213 is inclined to the same side from inside to outside as the direction opposite to the rotation direction of the impeller body 21. When the impeller body 21 rotates around its own axis, under the action of the centrifugal force, a direction in which the liquid material flows is the same to that of the centrifugal force, and the liquid material is more easily thrown out of the overflow hole 213, so that the liquid material is dispersed, the higher a dispersion degree of the liquid, the better the quality of mixing with the solid material.

In an embodiment not forming part of the present invention, the overflow hole 213 is arranged in a radial direction of the impeller body 21.

In some embodiments of the disclosure, the overflow hole 213 is a circular hole, an elliptic hole, a polygonal hole, or a flat hole.

Referring to FIG. 3, the flat hole facilitates the dispersion of the liquid material, increases the dispersion degree of the liquid material, and improves the mixing quality of the solid material and the liquid material.

Referring to FIG. 1 to FIG. 5, in some embodiments of the disclosure, the impeller body 21 includes a cylinder segment 212 and a frustum section 211 smoothly connected to the cylinder segment 212, the frustum section 211 has a large end connected to the cylinder segment 212, and the cavity 214 passes through the cylinder segment 212 and extends into the frustum section 211.

In some embodiments of the disclosure, the overflow hole 213 is defined on a side wall of the frustum section 211.

Specifically, the setting of the frustum section 211 facilitates the downward transportation of solid material, and because the side wall of the frustum section 211 is an inclined surface, the feeding speed of solid is increased. The cylinder segment 212 is disposed under the frustum segment 211 to increase the height of the impeller body 21. The cavity 214 extends through the cylinder segment 212 and the frustum segment 211, and the overflow hole 213 is defined on the side wall of the frustum segment 211 and is connected to the cavity 214. When the liquid material is transported from bottom to top, the liquid material flows through the cavity 214 and is thrown out of the overflow hole 213 on the side wall of the frustum segment 211 to be mixed with the solid material on the side wall of the frustum segment 211. Because the side wall of the frustum segment 211 is inclined, the mixing interface area of the solid material and the liquid material is increased, the feeding speed is improved, and the mixing efficiency is improved.

In some embodiments, the cavity 214 is a ring cavity, and the ring cavity and the impeller body 21 are disposed coaxially. Alternatively, the cavity 214 includes multiple sub-cavities arranged at intervals, and the multiple sub-cavities cooperatively form the cavity 214.

Specifically, the cavity 214 serves to provide a temporary storage space for the liquid material, when the impeller body 21 rotates, the liquid material temporarily stored in the cavity 214 can be thrown out of the overflow hole 213 under the action of the centrifugal force, thereby improving the dispersion degree of the liquid material. When the cavity 214 is a ring cavity, the volume of the cavity 214 is increased, and the liquid material can be fully dispersed when the liquid material flows out, thus improving the mixing quality of the liquid material and the solid material.

It can be understood that when the cavity 214 includes multiple sub-cavities, the liquid material flows into the multiple sub-cavities from bottom to top, and during the rotation of the impeller body 21, the liquid material can be initially dispersed in the sub-cavities and then dispersed again when the liquid material is thrown out of the overflow hole 213 under the action of the centrifugal force. The cavity 214 formed by the multiple sub-cavities can improve the dispersion degree of the liquid material, thereby improving the mixing quality of the solid material and the liquid material and improving the mixing efficiency.

In some embodiments of the disclosure, the impeller body 21 is provided with multiple vanes 22 arranged at intervals at an outer wall of impeller body 21, and at least one overflow hole 213 is defined in an area between two adjacent vanes 22.

Specifically, the vane 22 can guide the solid material to be transported downward, a flow channel is defined between two adjacent vanes 22, the solid material is transported in the flow channel from top to bottom, and the overflow hole 213 is defined between two adjacent vanes 22, that is, it is disposed in the flow channel. During the rotation of the impeller body 21, the overflow hole 213 is inclined to the same side from inside to outside as a direction opposite to a rotation direction of the impeller body 21. During the rotation of the impeller body 21 around its own axis, the liquid material in the cavity 214 is thrown out of the overflow holes 213 under the action of the centrifugal force, and is further dispersed after impacting with the vane 22, thereby making the mixing of solid material and liquid material more uniform, reducing the generation of caking, and improving the mixing efficiency.

It can be understood that the number and apertures of the overflow holes 213 are not considered as limitations to the disclosure. The number and apertures of the overflow holes 213 are positively correlated with the flow velocity of the liquid material, and the apertures of the overflow holes 213 are inversely correlated with the dispersion degree of the liquid material. When the number of overflow holes 213 is greater and the apertures are larger, the flow velocity of the liquid material is faster under a certain pressure of a driving pump. When the number of the overflow holes 213 is smaller and the apertures are smaller, the flow velocity of the liquid material is slower. Furthermore, smaller apertures of the overflow holes 213 may lead to higher dispersion degree of the liquid material. Therefore, specific parameters such as the number and apertures of the overflow holes 213 are selected and determined according to the nature of the liquid material and the pressure of the driving pump.

In some embodiments of the disclosure, the impeller body 21 is provided with multiple vanes 22 arranged at intervals at the outer wall of impeller body 21, and two ends of the baffle 215 abut against vanes 22 at two adjacent sides of the baffle 215.

Specifically, the two ends of the baffle 215 may abut against two adjacent vanes 22, or the baffle 215 only covers the aperture of the overflow hole 213, so the width of baffle 215 is not limited in the disclosure. However, the distance between a far end of the baffle 215 and the outer wall of the impeller body 21 should be less than a chord length of the vane 22, so as to avoid affecting feeding efficiency of solid due to excessive accumulation of solids at the baffle 215.

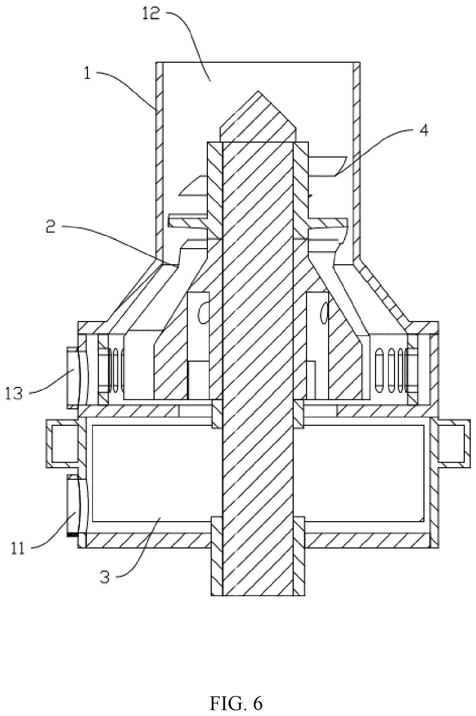

Referring to FIG. 6, the disclosure also provides a pulping device. The pulping device includes a housing 1, and the mixing impeller 2 disposed in the housing 1.

Specifically, the housing 1 defines a liquid inlet 11 on a peripheral wall at the bottom of the housing 1. The liquid material enters from the liquid inlet 11, the housing 1 is provided with a liquid dispersion device 3 at the bottom the housing 1, the liquid material is dispersed by the liquid dispersion device 3 and flows to the mixing impeller 2. The housing 1 defines a solid inlet 12 at the top of the housing 1, the housing 1 is provided with a solid dispersion device 4 at the top of the housing 1, and the solid material is dispersed by the solid dispersion device 4 and flows to the mixing impeller 2. The dispersed liquid material enters the cavity 214 from the bottom of the impeller body 21 and is thrown out of the overflow holes 213 under the action of the centrifugal force, and the solid material is transported downward in the outer flow passage of the impeller body 21, after the solid material and the liquid material are fully mixed on the top side wall of the impeller body 21, the mixed solid material and the liquid material flow out of the mixture outlet 13 on the side wall of the housing 1.

The liquid material enters from the liquid inlet 11, after being dispersed by the dispersion device, the liquid material flows upward under the action of the driving pump, a guide plate is disposed between the liquid dispersion 3 and mixing impeller 2 to make the liquid flow into the cavity 214 of the impeller. The solid material flows to the mixing impeller 2 after being dispersed by the solid dispersing device 4, when the mixing impeller 2 rotates, the solid material is transported downward along the flow passage between two adjacent vanes 22 under the guiding downward pressure of the blades 22, and is mixed with the liquid material near the flow hole 213. By means of the mixing impeller 2, the height of the mixing interface of the solid material and the liquid material of the pulping device is increased, a feeding speed is increased, and g the pulping efficiency is improved.

## Claims

1. A mixing impeller (2), comprising:
an impeller body (21), wherein the impeller body (21) defines, at a bottom end of the impeller body (21), a cavity (214) extending to a top end of the of the impeller body (21), and the impeller body (21) defines an overflow hole (213) in communication with the cavity (214) at a side wall of the impeller body (21);
**characterized in that** the overflow hole (213) is inclined from the top end of the impeller body (21) to the bottom end of the impeller body (21) in a direction from an inner wall of the impeller body (21) to an outer wall of the impeller body (21).

2. The mixing impeller (2) of claim 1, wherein the overflow hole (213) is implemented as a plurality of overflow holes (213), the plurality of overflow holes (213) are arranged around the side wall of the impeller body (21) at intervals, and the plurality of overflow holes (213) are disposed at part of the side wall close to the top end of the impeller body (21).

3. The mixing impeller (2) of claim 1, wherein the overflow hole (213) is inclined to the same side from inside to outside as a direction opposite to a rotation direction of the impeller body (21).

4. The mixing impeller (2) of claim 1, wherein the overflow hole (213) is a circular hole, an elliptic hole, a polygonal hole, or a flat hole.

5. The mixing impeller (2) of claim 1, wherein the impeller body (21) comprises a cylinder segment (212) and a frustum section (211) smoothly connected to the cylinder segment (212), the frustum section (211) has a large end connected to the cylinder segment (212), and the cavity (214) passes through the cylinder segment (212) and extends into the frustum section (211).

6. The mixing impeller (2) of claim 5, wherein the overflow hole (213) is defined on a side wall of the frustum section (211).

7. The mixing impeller (2) of claim 1, wherein the cavity (214) is a ring cavity, and the ring cavity and the impeller body (21) are disposed coaxially.

8. The mixing impeller (2) of claim 1, wherein the cavity (214) comprises a plurality of sub-cavities arranged at intervals, and the plurality of sub-cavities cooperatively form the cavity (214).

9. The mixing impeller (2) of claim 1, wherein the impeller body (21) is provided with a plurality of vanes (22) arranged at intervals at an outer wall of impeller body (21), and at least one overflow hole (213) is defined in an area between two adjacent vanes (22).

10. A pulping device, comprising:
a housing (1); and
the mixing impeller (2) of any one of claims 1 to 9,
wherein the mixing impeller (2) is disposed in the housing (1).

## Patentansprüche

1. Mischlaufrad (2), das Folgendes beinhaltet:
einen Laufradkörper (21), wobei der Laufradkörper (21) an einem unteren Ende des Laufradkörpers (21) einen Hohlraum (214) definiert, der sich zu einem oberen Ende des Laufradkörpers (21) erstreckt, und der Laufradkörper (21) ein Überlaufloch (213) definiert, das mit dem Hohlraum (214) an einer Seitenwand des Laufradkörpers (21) in Verbindung steht;
**dadurch gekennzeichnet, dass** das Überlaufloch (213) vom oberen Ende des Laufradkörpers (21) zum unteren Ende des Laufradkörpers (21) in einer Richtung von einer Innenwand des Laufradkörpers (21) zu einer Außenwand des Laufradkörpers (21) geneigt ist.

2. Mischlaufrad (2) nach Anspruch 1, wobei das Überlaufloch (213) als mehrere Überlauflöcher (213) ausgestaltet ist, die mehreren Überlauflöcher (213) in Abständen um die Seitenwand des Laufradkörpers (21) angeordnet sind und die mehreren Überlauflöcher (213) an einem Teil der Seitenwand in der Nähe des oberen Endes des Laufradkörpers (21) positioniert sind.

3. Mischlaufrad (2) nach Anspruch 1, wobei das Überlaufloch (213) zur gleichen Seite von innen nach außen wie eine Richtung, die einer Drehrichtung des Laufradkörpers (21) entgegengesetzt ist, geneigt ist.

4. Mischlaufrad (2) nach Anspruch 1, wobei das Überlaufloch (213) ein kreisförmiges Loch, ein elliptisches Loch, ein mehreckiges Loch oder ein flaches Loch ist.

5. Mischlaufrad (2) nach Anspruch 1, wobei der Laufradkörper (21) ein Zylindersegment (212) und einen kegelstumpfförmigen Abschnitt (211), der glatt mit dem Zylindersegment (212) verbunden ist, beinhaltet, der kegelstumpfförmige Abschnitt (211) ein großes Ende aufweist, das mit dem Zylindersegment (212) verbunden ist, und der Hohlraum (214) durch das Zylindersegment (212) verläuft und sich in den kegelstumpfförmigen Abschnitt (211) erstreckt.

6. Mischlaufrad (2) nach Anspruch 5, wobei das Überlaufloch (213) an einer Seitenwand des kegelstumpfförmigen Abschnitts (211) definiert ist.

7. Mischlaufrad (2) nach Anspruch 1, wobei der Hohlraum (214) ein Ringraum ist und der Ringraum und der Laufradkörper (21) koaxial positioniert sind.

8. Mischlaufrad (2) nach Anspruch 1, wobei der Hohlraum (214) mehrere von in Abständen angeordneten Teil-Hohlräumen beinhaltet und die mehreren Teil-Hohlräume zusammenwirkend den Hohlraum (214) bilden.

9. Mischlaufrad (2) nach Anspruch 1, wobei der Laufradkörper (21) mit mehreren Schaufeln (22), die in Abständen an einer Außenwand des Laufradkörpers (21) angeordnet sind, versehen ist und mindestens ein Überlaufloch (213) in einem Bereich zwischen zwei benachbarten Schaufeln (22) definiert ist.

10. Aufschlussvorrichtung, die Folgendes beinhaltet:
ein Gehäuse (1); und
das Mischlaufrad (2) nach einem der Ansprüche 1 bis 9, wobei das Mischlaufrad (2) in dem Gehäuse (1) positioniert ist.

## Revendications

1. Roue de mélangeage (2), comprenant :
un corps de roue (21), le corps de roue (21) définissant, au niveau d'une extrémité basse du corps de roue (21), une cavité (214) qui s'étend jusqu'à une extrémité haute du corps de roue (21), et le corps de roue (21) définissant un trou de trop-plein (213) en communication avec la cavité (214) au niveau d'une paroi latérale du corps de roue (21) ;
**caractérisée en ce que**
le trou de trop-plein (213) est incliné à partir de l'extrémité haute du corps de roue (21) jusqu'à l'extrémité basse du corps de roue (21) dans une direction allant d'une paroi interne du corps de roue (21) à une paroi externe du corps de roue (21).

2. Roue de mélangeage (2) de la revendication 1, où le trou de trop-plein (213) est concrétisé sous la forme d'une pluralité de trous de trop-plein (213), la pluralité de trous de trop-plein (213) étant agencés autour de la paroi latérale du corps de roue (21) à certains intervalles, et la pluralité de trous de trop-plein (213) étant disposés au niveau d'une partie de la paroi latérale à proximité de l'extrémité haute du corps de roue (21).

3. Roue de mélangeage (2) de la revendication 1, où le trou de trop-plein (213) est incliné sur le même côté de l'intérieur à l'extérieur suivant une direction opposée à une direction de rotation du corps de roue (21).

4. Roue de mélangeage (2) de la revendication 1, où le trou de trop-plein (213) est un trou circulaire, un trou elliptique, un trou polygonal, ou un trou plat.

5. Roue de mélangeage (2) de la revendication 1, où le corps de roue (21) comprend un segment de cylindre (212) et une section tronconique (211) raccordée de manière lisse au segment de cylindre (212), la section tronconique (211) ayant une grande extrémité raccordée au segment de cylindre (212), et la cavité (214) passant à travers le segment de cylindre (212) et s'étendant jusque dans la section tronconique (211).

6. Roue de mélangeage (2) de la revendication 5, où le trou de trop-plein (213) est défini sur une paroi latérale de la section tronconique (211).

7. Roue de mélangeage (2) de la revendication 1, où la cavité (214) est une cavité annulaire, et la cavité annulaire et le corps de roue (21) sont disposé/es de manière coaxiale.

8. Roue de mélangeage (2) de la revendication 1, où la cavité (214) comprend une pluralité de cavités secondaires agencées à certains intervalles, et la pluralité de cavités secondaires formant de manière coopérante la cavité (214).

9. Roue de mélangeage (2) de la revendication 1, où le corps de roue (21) est doté d'une pluralité d'ailettes (22) agencées à certains intervalles au niveau d'une paroi externe du corps de roue (21), et au moins un trou de trop-plein (213) est défini dans une zone entre deux ailettes adjacentes (22).

10. Dispositif de réduction en pâte, comprenant :
un logement (1) ; et
la roue de mélangeage (2) de n'importe laquelle des revendications 1 à 9, la roue de mélangeage (2) étant disposée dans le logement (1).
